# EUROPEAN PATENT APPLICATION

(11) **EP 1 788 485 A1**
(43) Date of publication of application: **23.05.2007**
(21) Application number: 05772688.7
(22) Date of filing: 19.08.2005
(51) Int. Cl.: G06F 11/32, G06F 11/36

(54) **SOURCE PROGRAM ANALYSIS DEVICE AND METHOD**

(30) Priority: 23.08.2004 JP 2004242151
(71) Applicant: Pacific Design Inc., Tokyo 160-0023 (JP)
(72) Inventor: SHIMOGORI, Shintaro, Pacific Design Inc., Tokyo 160-0023 (JP)
(74) Representative: Billington, Lawrence Emlyn
(86) International application number: PCT/JP2005/015158
(87) International publication number: WO 2006/022204

(57) **Abstract**

There is provided an analyzing apparatus for finding the possibility of dividing up and executing a source program using debugging information generated when compiling the source program and memory access information generated by running object code on a simulator. The analyzing apparatus includes: a memory that stores block IDs for grouping some out of the source statements in the source program as processing blocks associated with code memory addresses of respective instructions, based on the debugging information; and a graphical display functional unit that graphically displays, on a display device, based on the memory access information and together with cycle times, an access state for execution memory when the source program is performed, the access state including code memory addresses, variable memory addresses, and access types and being displayed using a different style for each block ID associated with the code memory addresses of the respective instructions.

## Description

### TECHNICAL FIELD

An apparatus and method are relating to an analyzing for designing, and supporting the designing of, a device that executes a process specified using a source program.

### BACKGROUND ART

Japanese Laid-Open Patent Publication No. 2003-216678 discloses a method which, when executing a specification or a program written in C (C-language), converts a specified process or program function in the program to special-purpose circuitry (dedicated circuit) so that the program can be run efficiently. The publication also discloses a cycle-based instruction level simulator (hereinafter simply "ISS") that can simulate an instruction set for the special-purpose circuit using a model that is divided into cycles.

In a programs that include a plurality of source statements, the processing of the source statements are fundamentally executed sequentially. If more than enough hardware resources are available to execute the program, attempts are made to divide part of the program and carry out parallel processing to raise the processing efficiency. One method of converting to a program to parallel processing executes instruction units (for example, each instruction) in parallel. Another method divides the program into blocks (so-called "processing blocks") that include a plurality of instructions and executes the program simultaneously in parallel in block units (for example, each block). Another technique is so-called "block pipeline processing" where the processing proceeds by supplying data in order to processing blocks that can be run in parallel, thereby configuring a pipeline out of the processing blocks.

### DISCLOSURE OF THE INVENTION

One aspect of the present invention is a system for assisting or aiding the designing of devices and includes a compiler, a simulator, and an apparatus for analyzing the source program using information obtained by the compiler and the simulator. The compiler compiles a source program including a plurality of source statements to generate object code and also generates debugging information. The debugging information includes information that links the respective source statements and/or intermediate lists with code memory address and variable memory address. The intermediate lists are produced by translating the respective source statements into intermediate language. The code memory addresses are addresses of instructions produced by coding the intermediate lists. The variable memory addresses are addresses of variables accessed by such instructions. The code memory addresses and variable memory addresses indicate addresses in execution memory when the object code is executed.

The simulator is a cycle-based simulator and generates memory access information by running the object code. The memory access information includes code memory addresses, variable memory addresses, and access types that are accessed in cycle units (for example, in each cycle).

The analyzing apparatus includes: a memory that stores block IDs for grouping part of (some out of) the plurality of source statements or part of (some out of) the intermediate lists as processing blocks so that the block IDs are associated with code memory addresses of respective instructions based on the debugging information; and a graphical display function (functional unit) that graphically displays, based on the memory access information and together with elapse of cycles (cycle times), an access state for execution memory when the source program is performed, on a display device. The access state includes variable memory addresses and access types. The access state may further include code memory addresses. The access state is preferably displayed using a different style for each block ID associated with the code memory addresses of the respective instructions. One aspect of using different styles is to display the access state using different colors for different block IDs.

The analyzing apparatus stores the block IDs associated with the code memory addresses of the respective instructions in the memory. The access states that may include code memory addresses and variable memory addresses associate with or correlate with the processing blocks to which the respective instructions belong via the code memory addresses and the block IDs. Accordingly, the graphical display functional unit can display an access state that changes from one cycle to the next (i.e., as the cycle time elapsing) in a manner that makes it possible to recognize the access state in units of the processing blocks to which the instructions carrying out such memory accesses belong. The analyzing apparatus can also change the block IDs for the code memory addresses of the respective instructions by changing the data stored in the memory that associates the block IDs with the source statements or intermediate lists. Accordingly, it is possible to easily and flexibly change the composition and/or grouping of a plurality of processing blocks in a program, based on the source statements or the intermediate lists. This means that it is possible to display the access states for the execution memory based on rearranged processing blocks in a short time without having to repeat the compiling and simulation processes.

It is also possible to automatically analyze the source program and set a plurality of processing blocks. On the other hand, at the design stage of devices, it is important for the user to be able to flexibly designate or define a plurality of processing blocks from outside. It is preferable to change the composition of the plurality of processing blocks for dividing the source program by merely selecting part of the source statements or part of the intermediate level displayed on the display device. That is, the analyzing apparatus, for being able to change the processing blocks at the source level or intermediate language level should preferably include: a functional unit for displaying at least a part (some out) of the plurality of source statements or at least a part (some out) of the intermediate lists on the display device; and a functional unit for referring to the debugging information and assigning a different block ID to the block IDs of other processing blocks to code memory addresses of instructions corresponding to a part (some) of the plurality of source statements or a part (some) of the intermediate lists that have been designated on the display device.

It is also preferable to be able to change the composition and/or grouping of the processing blocks of the program by designating the code memory addresses displayed as the access state. By referring to the debugging information, it is possible to display the rearranged processing blocks at the source program level or the intermediate language level. When the designation of the plurality of processing blocks is changed, it will be possible to display the access state based on recomposed or re-divided processing blocks at the stage where the composition of the processing blocks of the program is changed, without having to repeat the simulation.

One of other aspects of the present invention is a program or program product for causing a computer to execute a process that uses debugging information and memory access information to analyze a source program including a plurality of source statements. This process of analyzing includes: (step of) storing block IDs for grouping part of the plurality of source statements or part of the intermediate lists as processing blocks in a memory so that the block IDs are associated with code memory addresses based on the debugging information; and (step of) graphically displaying, based on the memory access information and together with elapse of the cycles, an access state for the execution memory when the source program is performed, on a display device, the access state including code memory addresses, the variable memory addresses and the access types and being displayed using a different style for each block ID associated with the code memory addresses of the respective instructions. This program can be provided having been recorded on a suitable recording medium and by installing the program on a computer, it is possible to have the computer function as an analyzing apparatus.

With this analyzing apparatus, it is easy to change the composition and/or grouping of the plurality of processing blocks produced by dividing the source program and it is possible to display the access state for the execution memory in units of processing blocks for a variety of different compositions of processing blocks without having to repeat the simulation. This means that the analyzing apparatus can show the access state for execution memory in units of processing blocks for the designated composition of processing blocks using a memory access analyzing means that is a CPU or other suitable computation function.

It is preferable that the analyzing apparatus includes a first judging functional unit that shows (indicates), based on the memory access information and the block IDs associated with the code memory addresses of the respective instructions, a direction of data transfers via the execution memory between processing blocks that form a pair. Showing such direction of data transfer is effective for judging whether pipeline processing is possible for the blocks. When the composition of the processing blocks in the source program is changed, if the directions of the data transfers between a pair of processing blocks are all the same, it will be possible to execute the pair of processing blocks in parallel by pipeline processing.

When there are a plurality of pairs of processing blocks, by displaying the amounts and directions of data transfers via the execution memory between such pairs in a matrix on the display device, it is possible to easily designate pairs of processing blocks that can be executed in parallel by pipeline processing. It is also possible to display, in response to one of the data transfers displayed in the matrix being designated, the source statements or intermediate lists corresponding to the designated data transfer on the display device.

Further one of other aspects of the present invention is a method of analyzing a source program including a plurality of source statements using debugging information and memory access information, the method including steps of:
a1. assigning block IDs to part of the plurality of source statements or part of the intermediate lists to group the source statements or the intermediate lists as processing blocks and storing the block IDs in a memory so as to be associated with code memory addresses of respective instructions based on the debugging information;
a2. finding a direction of data transfers via the execution memory between processing blocks that form a pair, by a memory access analyzing means, based on the memory access information and the block IDs associated with the code memory addresses; and
a3. displaying, in a matrix on a display device, amounts and directions of data transfers via the execution memory between processing blocks that form a plurality of pairs.

It is effective for the analyzing apparatus to have a second judging functional unit that finds, for processing blocks of a designated composition and based on the memory access information and the block IDs associated with the code memory addresses of the respective instructions, a reference relationship between a first processing block and a second processing block for a same area in the execution memory. If such reference relationship is found, it will be possible to judge processing regions where accesses to the same area in the execution memory do not overlap or cross. If accesses do not overlap or do not cross in a processing region or processing parts, access by another processing block can be permitted during such region. In such conditions, parallel execution of the first processing block and the second processing block is possible, and the result of virtually executing the first processing block and the second processing block in parallel can be displayed.

Further, by analyzing the order relationship or sequence included in the memory access state information, in the process for second judging, it becomes possible to judge what extent a plurality of processing blocks can be executed overlapping one another. When a limitation where a preceding processing block (i.e., processing of a block region) writes data and then a succeeding processing block reads such data is satisfied, parallel processing of such processing blocks will be possible within a range where the reference relationship for the data is satisfied, which makes it possible to further reduce the processing time.

It is possible to output (calculate and show), based on the memory access information and the block IDs associated with the code memory addresses of the respective instructions, a bandwidth required for accesses to the execution memory when the first processing block and the second processing block are executed by parallel processing. It is effective to provide a functional unit that displays a relationship between bandwidth and cycles using a graph to determine the bandwidth between one processing block and another processing block that have been designated. It is also effective to provide a functional unit or step that sets the conditions for pipeline processing of a plurality of processing blocks, such as the bandwidth that can be used.

Further one of other aspects of the present invention is a method of analyzing a source program relating to pipeline processing and includes steps of:
b1. assigning block IDs to part of a plurality of source statements or part of intermediate lists to group the source statements or the intermediate lists as processing blocks and storing the block IDs in a memory so as to be associated with code memory addresses of respective instructions based on debugging information;
b2. finding a reference relationship between a first processing block and a second processing block for a same area in an execution memory, by a memory access analyzing means, based on memory access information and the block IDs associated with the code memory addresses of the respective instructions and showing whether parallel execution is possible for the first processing block and the second processing block; and
b3. outputting, by the memory access analyzing means, based on the memory access information and the block IDs associated with the code memory addresses of the respective instructions, a bandwidth required for accesses to the execution memory by the first processing block and the second processing block.

With this analyzing apparatus and method of analyzing, it is possible to judge whether it is possible to execute a plurality of processing blocks by pipeline processing and whether it is possible to execute the processing blocks with increased parallelism compared to simple pipeline processing without carrying out simulation after dividing the program itself into independent blocks in many ways. As a result, it is possible to know whether pipeline processing and parallel processing are possible, to know the composition of a plurality of processing blocks suited to such processing, and to know the amount of data transfer and bandwidth required for parallel processing. By using such information, it is possible to divide processing described by a source program into a plurality of processing regions or parts ("processing blocks") and to enable such processing blocks to be executed with suitable timing by separate hardware, thereby making it possible to design a device that can execute the processing described by the source program in a so-called "multiprocessor device" environment. If, as a result of making judgments about block pipeline processing, it is found that it is not possible to achieve a desired performance when the program is converted to blocks of a certain composition, it is possible to change the definitions of the processing blocks in a GUI environment and then judge whether it is possible to carry out block pipeline processing with the program divided into blocks of another composition.

### BRIEF DESCRIPTION OF THE DRAWINGS

FIG. 1 schematically shows an assisting system that includes an analyzing apparatus.
FIG. 2 schematically shows debugging information, memory access information, and block information.
FIG. 3 schematically shows how processing blocks are set corresponding to the description of a source program.
FIG. 4 shows an example display image of a memory access state.
FIG. 5 is a diagram for explaining a data transfer between processing blocks.
FIG. 6 shows an example display image of a matrix showing data transfers.
FIG. 7 shows an example display image of source statements backtracking from the matrix display.
FIG. 8 shows an example of a reference relationship between memory accesses.
FIG. 9 shows one example of a reference relationship between memory accesses when processing blocks are executed in parallel.
FIG. 10 shows another example of a reference relationship for memory accesses when processing blocks are executed in parallel.
FIG. 11 shows an example display image for showing a reference relationship between memory accesses including bandwidth.
FIG. 12 is a flowchart schematically showing a method of analyzing.
FIG. 13 shows an execution state of a plurality of processing blocks.
FIG. 14 shows an example where a plurality of processing blocks are carried out by pipeline processing.
FIG. 15 shows an example where a plurality of processing blocks are carried out with increased parallelism.

### BEST MODE FOR CARRYING OUT THE INVENTION

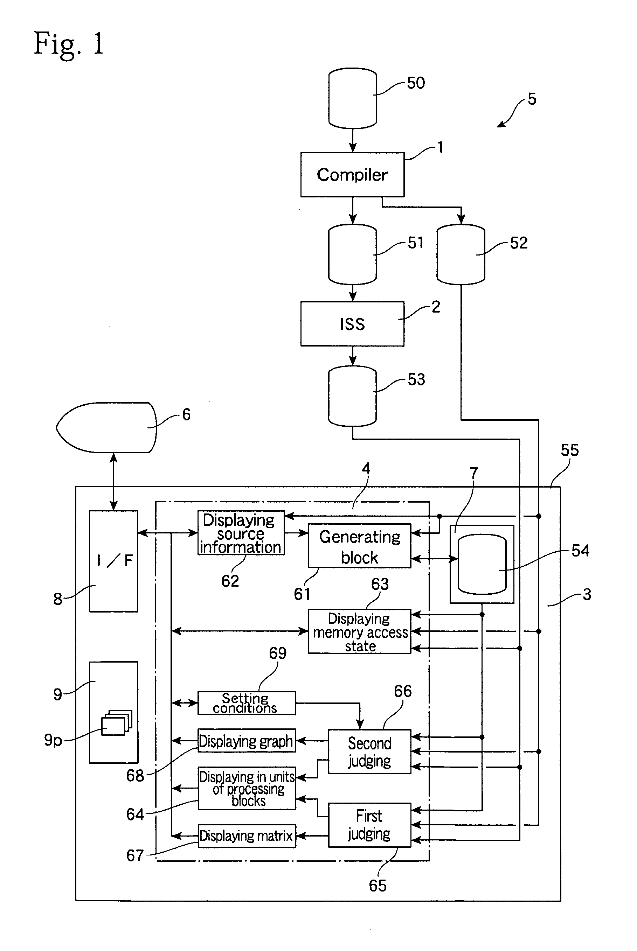

FIG. 1 schematically shows an assisting system 5 that includes function of analyzing a source program 50 in order to assist and/or aid a design process that implements the processing written in the source program 50 in devices, for example, semiconductor devices. As one example, the software (source program) 50 to be analyzed is an application for image processing that carries out compression and decompression of images using MPEG4 protocol. The support system 5 includes a compiler 1 that compiles the source program 50 that is the target for analysis and a cycle-based instruction level simulator (ISS) 2 that runs the compiled object code 51 to generate memory access information 53 that includes access states for a memory during execution and cycle information. Aside from the object code 51, the compiler 1 also generates debugging information 52. The debugging information 52 includes linking information that shows the relationship between source statements included in the source program 50, for example C statements that are written in C (C language), addresses ("code memory addresses") in memory of instructions produced by coding the statements, and addresses ("variable memory addresses") in memory of variables accessed by such instructions.

The assisting system 5 also includes an analyzing apparatus (analyzer) 55 that uses the debugging information 52 and the memory access information 53 to analyze the source program 50 from the operation-based standpoint of memory accesses by the source program 50. The compiler 1, the ISS 2, and the analyzer 55 may be apparatuses equipped with dedicated hardware. In many cases, such apparatuses are provided as software that causes a computer (which is equipped with suitable hardware resources such as an input/output device, a storage device (a memory device), and a CPU) to function as the compiler 1, the ISS 2, and the analyzing apparatus 55. Accordingly, when the assisting system 5 is realized by a single computer or a plurality of computers connected by a network, the debugging information 52 and the memory access information 53 that are inputted into the analyzing apparatus 55 are supplied to the analyzing apparatus 55 via a suitable recording medium such as a hard disk drive included in the system 5 or a suitable transfer path such as a computer network. The debugging information 52 is described hereinafter as the information that includes the linking information and also information out of the source program 50 and the object code 51 that will be required during analysis. To reduce the size of the debugging information 52, it is also possible to supply the debugging information 52 to the analyzing apparatus 55 together with the source program 50 and/or the object code 51.

When analyzing the operation or execution result of the source program 50 that is the target software, the analyzing apparatus 55 generates block information 54 that designates block regions in the source program 50. Each block region includes one or a plurality of C statements included in the source program 50. A process or group of processes composed of statements divided (grouped) using such block regions is handled as a unit or cluster that cannot be divided up when the operations of the source program 50 are analyzed by the analyzing apparatus 55. Accordingly, groups produced by dividing the source program 50 to group together a plurality of C statements included in the source program 50 are hereinafter referred to as "processing blocks". Unique block IDs are assigned to the individual processing blocks in the block information 54 to distinguish the processing blocks from one another.

The analyzing apparatus 55 is realized by a computer 3 equipped with suitable hardware resources. For example, the computer 3 is equipped with a CPU 4 that has a computation function and is used to realize a plurality of functional units that will be described later, a memory 7 for storing data, a program memory (storage medium) 9 such as a ROM in which a program (e.g., program product) 9p for causing the computer 3 to function as the analyzing apparatus 55 or the like is stored, an input/output interface 8, and an input/output device 6 that can displays data and input data via the input/output interface 8. In the analyzing apparatus 55, the interface 8 has a GUI (Graphical User Interface) function that enables the user to visually grasp the operations of the source program 50 and the input/output device 6 is equipped with a function as a display device for displaying graphics. However, the hardware resources provided in the computer 3 are not limited to those described above.

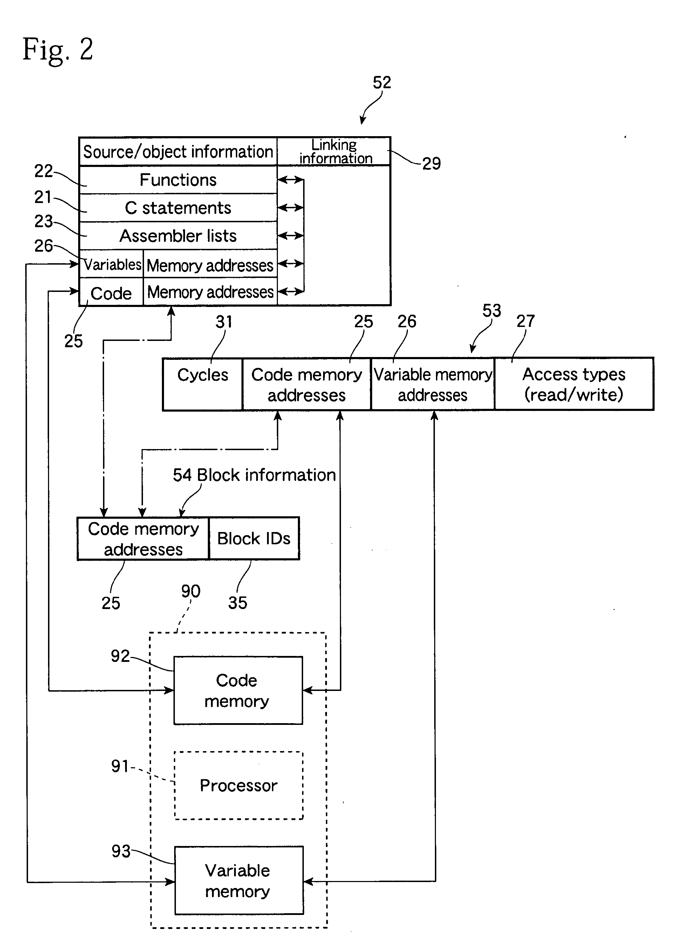

FIG. 2 schematically shows the debugging information, the memory address information, and the block information. The debugging information 52 includes source statements (C statements) 21 in C language that are included in the source program 50 as source information, function definitions 22 included in the source program 50, and intermediate lists 23 produced by converting the source statements 21 to an intermediate language. In this example, the intermediate language is assembler language and the intermediate lists 23 are assembler lists. The debugging information 52 includes, as object information, memory addresses (i.e., code memory addresses) 25 of instructions (codes or coded instructions) produced by coding the assembler lists 23 and memory addresses (i.e., variable memory addresses) 26 of variables accessed by such instructions. In addition, the debugging information 52 includes linking information 29 that shows the relationship between the object information and the source information and is used during debugging to feed back from the object information to the source information. The code memory addresses 25 and the variable memory addresses 26 are addresses in memory (i.e., execution memory) when the processing of the source program 50 is executed with the object code 51 implemented in a semiconductor device 90. FIG. 2 shows the case where a Harvard architecture device 90, which includes a processor 91, a code memory 92 that provides code to the processor 91, and a data memory 93 that stores data, is used.

The memory access information 53 is generated by having the cycle-based ISS 2 run the object code 51. The memory access state for the memories 92 and 93 used in the device 90 during execution is recorded in cycle units (in each cycle) in the memory access information 53. Each row of memory access information 53 includes cycle information 31, code memory address 25 of an instruction that designates processing in that cycle, the variable memory addresses 26 that are accessed, and information 27 showing operation types (access types). As one example, a write or read operation for variables in one of execution memory 93 is recorded as the access type 27. In the ISS 2, the instruction codes in the object code 51 are sequentially executed in the order in which the instruction codes are given and parallel execution is not considered. This means that one code memory address 25 corresponds to each cycle time stored in the cycle information 31.

Since the memory access information 53 is recorded for each cycle, there is a large amount of information. Accordingly, the memory access information 53 should preferably be compressed and then stored and supplied to the analyzing apparatus 55. Although there are various methods for compressing data, it is effective to store the cycle information 31 as relative values that are given as consecutive combinations of a bit length and an incremental value. Dictionary compression is effective for the code memory addresses 25 and the variable memory addresses 26. Accordingly, dictionary values (index value of dictionary) corresponding to memory address values are stored in the memory access information 53 and a memory address dictionary used for decoding is supplied independently of the memory access information 53 to the analyzing apparatus 55.

The block information 54 includes the code memory addresses 25 and block IDs 35. The debugging information 52 is associated with the block IDs 35 via the code memory addresses 25 and therefore it is possible to know to which processing block identified by a block ID 35 source information including source statements 21 and assembler lists 23 belongs. The memory access information 53 is also associated with the block IDs 35 via the code memory addresses 25 and therefore it is possible to know to which processing block identified by a block ID 35 memory accesses in a given cycle belong. In addition, by specifying the memory accesses in a given cycle, it is possible to display the C statements 21 in the processing block that carries out such memory accesses.

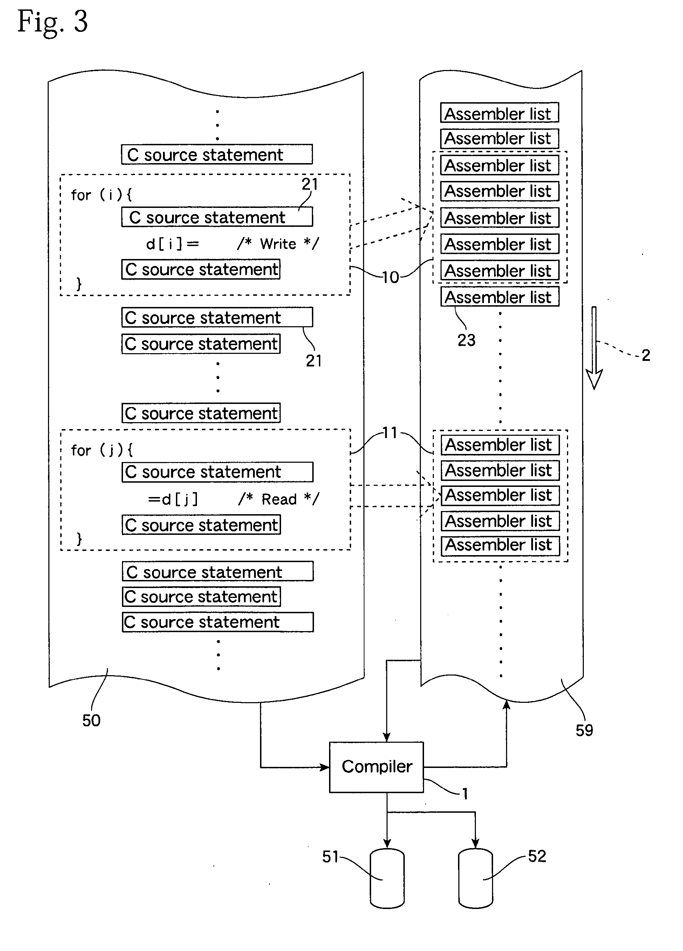

FIG. 3 shows how block regions are designated in the source program to set the processing blocks. The source program 50 including a plurality of C source statements 21 can be grouped from a variety of viewpoints, such as differences in the variables inputted and outputted, differences between inputting and outputting, and loop processing. From the viewpoint of accesses to memory, loop processes that include input/output processes for variables frequently access memory, and therefore it is effective to group such loop processes as individual blocks. For example, for the source program 50 shown in FIG. 3, it is possible to set the loop processes that respectively write into and read from the memory as two blocks 10 and 11.

In the compiler 1, the source program 50 is converted to assembler language that is an intermediate language to generate an intermediate file 59. Each statement in C language that is a high-level language is converted to one or a plurality of assembler list 23. Accordingly, processing blocks 10 and 11 that include one or a plurality of assembler lists 23 are defied or grouped corresponding to the processing blocks 10 and 11 that include one or a plurality of C statements 21.

The individual assembler lists 23 are converted to instruction codes in machine language, thereby generating the object code 51. At the same time, the debugging information 52 is generated. In the object code 51, instructions (codes, coded instructions) produced by coding the intermediate file 59 (which is in assembler language) are aligned in the same order as in the intermediate file 59 and are executed by the ISS 2 in that order.

The analyzing apparatus 55 shown in FIG. 1 can divide the source program 50 into processing blocks and identify the memory access state in units of the processing blocks (in each processing block). To do so, as shown in FIG. 1, the analyzing apparatus 55 includes a block generating function (functional unit) 61 that divides the source program 50 into blocks to generate the block information 54. The analyzing apparatus 55 may internally include a function that analyzes the source program 50 using the functions of a computer and automatically converts loop processes that include input/output for execution memory into blocks. The analyzing apparatus 55 also includes a function whereby blocks can be generated from outside by the user.

The analyzing apparatus 55 allows the user to determine how the source program 50 is divided into blocks. To do so, the analyzing apparatus 55 includes a source information displaying function (functional unit) 62 that displays, based on the debugging information 52, all or part of the C source statements 21 or the assembler lists 23 as source information on the input/output device 6 via the input/output interface 8. The source information displaying function 62 includes a function for setting a region that the user wishes to set as a block by having the user designate part of the source information displayed on the input/output device 6. Accordingly, as shown in FIG. 3, the user can set the processing blocks by individually designating the source statements 21 or assembler lists 23 or by designating regions of the source information 21 or assembler lists 23.

The block generating function 61 refers to the debugging information 52 and assigns a block ID 35 that is different from the block IDs 35 of other processing blocks to the code memory addresses 25 of instructions corresponding to the source statements 21 or assembler lists 23 that have been designated using the display device 6. The correspondence between the code memory addresses 25 and the block IDs 35 is stored in the memory 7 as the block information 54.

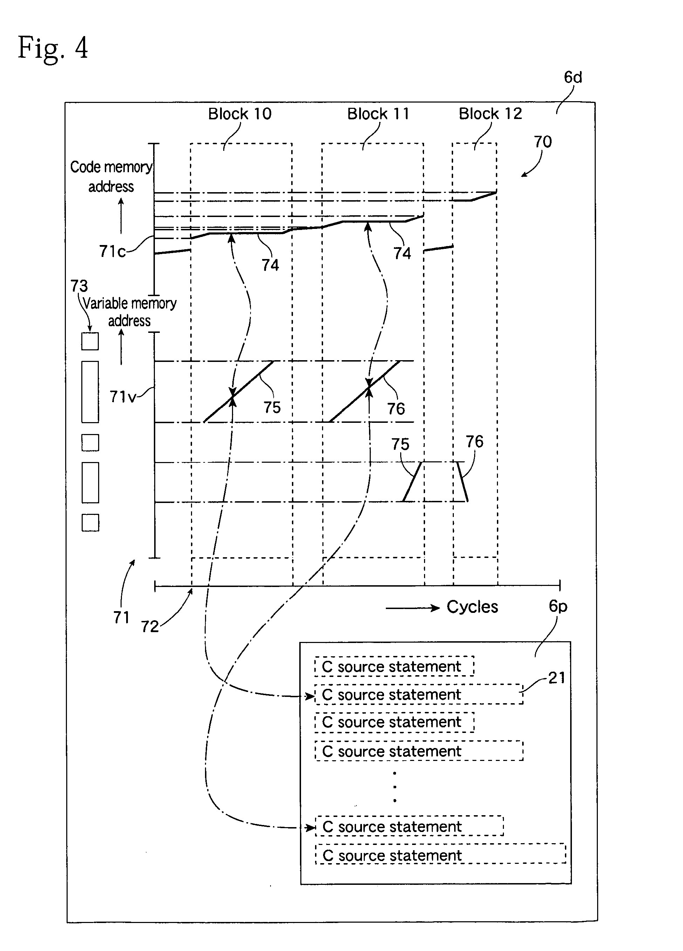

FIG. 4 shows one example of a display image showing an access state of the memory. The analyzing apparatus 55 further includes a function (functional unit) 63 that graphically displays, based on the memory access information 53, an access state for the execution memories 92 and 93 together with the elapse of cycles (cycle times) on the input/output device 6. A graph 70 is displayed on the display 6d of the input/output device 6 with a vertical axis 71 that indicates memory addresses and a horizontal axis 72 that indicates cycle times. The memory addresses 71 are displayed by dividing the graph in the vertical direction into addresses 71c in the code memory 92 and addresses 71v in the variable memory 93, with the variable memory addresses 71v being displayed together with variable names 73 referred to in the source program 50. The memory access information 53 includes the cycle information 31, the code memory addresses 25, the variable memory addresses 26, and the access types 27. Accordingly, by plotting the code memory addresses 25 and the variable memory addresses 26 on the graph 70 together with the cycle times, it is possible to display the access states for the execution memories 92 and 93 during different cycles. The access types 27 can be distinguished using different colors so that as one example, writes to the execution memory 93 are displayed using red lines 75 and reads from the execution memory 93 are displayed using blue lines 76. The lines 74 displayed for the code memory 92 fundamentally indicate reads.

The access state displayed in cycle units (in each cycle) in the graph 70 includes information of code memory addresses 25 and by referring to the block information 54, it is possible to determine the processing block (identified by a block ID 35) to which the instruction that performs the memory access belongs. In addition, since the object code 51 is sequentially executed by the ISS 2 in the order in which the instruction codes are given, parallel accesses to the memories 92 and 93 will not occur. This means that a memory access state shown together with a cycle time 72 will "belong" to one processing block. Accordingly, in the graph 70, by using different background colors for cycle times 72, it becomes possible to distinguish the processing block to which each memory access belongs. As one example, the region of the cycle times 72 that belong to the processing block 10 is displayed with a pale yellow background, the region of the cycle times 72 that belongs to the processing block 11 is displayed with a pale pink background, and the region of the cycle times 72 that belongs to the processing block 12 is displayed with a pale purple background.

The memory access states displayed in the graph 70 are also associated with the source information that carries out such accesses via the code memory addresses 25 and the block information 54. This means that by designating the cycle time of an access to the execution memory 93 that is graphically displayed on the display 6d, for example, by clicking on the line 75 showing the access, it is possible to extract the source statement 21 or the assembler list 23 corresponding to that memory access 75. When an input that can determine a block ID 35 from the graph 70 has been carried out, the function 63 that displaying the access state displays a popup screen 6p in which source statements 21 of the processing block with the corresponding block ID 35 are displayed. It is also possible to display assembler lists 23 instead of, or together with, the source statements 21 in the popup screen 6p.

The analyzing apparatus 55 further includes two functions (functional units) 65 and 66 for judging the conditions for block pipeline processing of the processing blocks. The first judging function 65 shows the direction of data transfers via the execution memory 93 between pairs of processing blocks, i.e., between the processing blocks 10 and 11, between the processing blocks 11 and 12, and between the processing blocks 10 and 12, and a judgment whether pipeline processing becomes possible. The second judging function 66 finds a reference relationship (an access relationship) between the first processing block 10 and the second processing block 11 for the same area of the execution memory 93 and a judgment how extent to which parallel processing of the first processing block 10 and the second processing block 11 becomes possible.

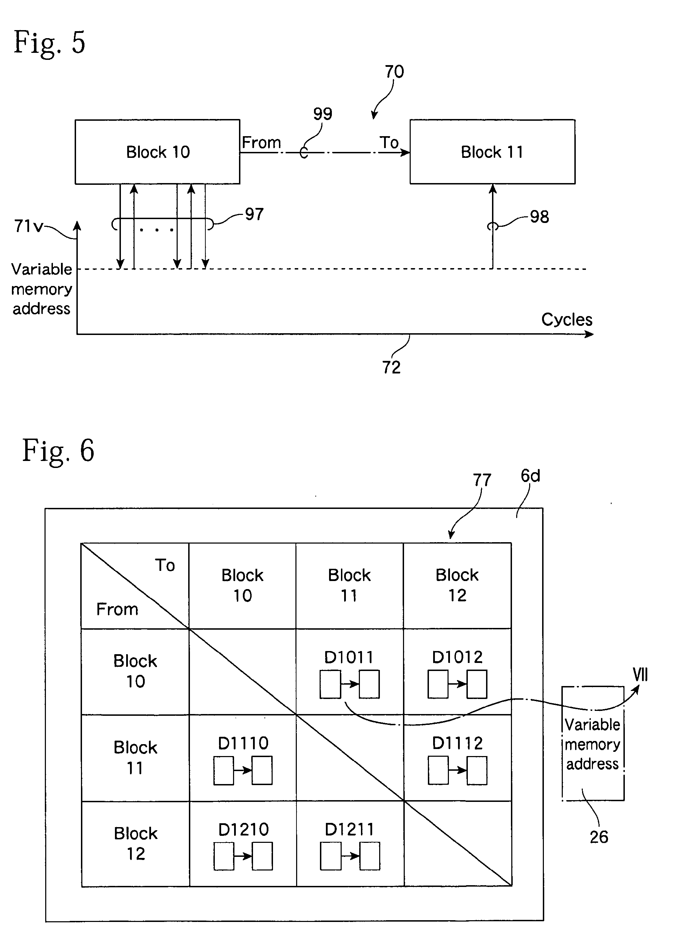

To determine whether a plurality of processing blocks that have been designated can be executed in parallel by pipeline processing, the first judging function 65 determines whether any communication is present between the processing blocks. To execute a pair of processing blocks, for example, the blocks 10 and 11 by pipeline processing, it is necessary to check whether there is communication from the block 10 to the block 11 but no communication from the block 11 to the block 10. The presence or absence of communication between blocks is determined based on data transfers via the variable memory 93. That is, as shown in FIG. 5, if in the graph 70 displayed by the function 63 that graphically displays the memory access state, the block 10 repeatedly carries out input/output operations 97 into and out of the variable memory 93 and after that the block 11 carries out a process 98 that reads data from the same address in the variable memory 93, data transfer (data communication) 99 is present from the block 10 to the block 11. Accordingly, regardless of whether or not the memory access state has been graphically displayed, the first judging function 65 can determine based on the memory access information 53 and the block information 54 whether there are any data transfers via the execution memory 93 between the processing blocks 10 and 11 that form a pair and also the directions of such transfers. If all the data transfers are in the same direction, it will be possible to execute the processing blocks 10 and 11 in parallel by pipeline processing.

FIG. 6 shows a matrix in which the directions and amounts of data transfer between a plurality of processing blocks are displayed on the display 6d. By using the matrix image 77, it becomes easy for the user to visually grasp the direction of the data transfers between pairs of blocks when three or more blocks, for example the blocks 10 to 12, have been defined for the source program 50. The amount of data transfer between blocks does not need to be calculated to judge whether a block pipeline can be configured, but is important when investigating bus width and the like during the designing of a device. The analyzing apparatus 55 is equipped with a function 67 that displays the matrix as a sub function included in the first judging function 65.

In this example, for a pair composed of the block 10 and the block 11, there is a data transfer D1011 from the block 10 to the block 11 but no data transfer D1110 in the opposite direction. For a pair composed of the block 11 and the block 12, there is a data transfer D1112 from the block 11 to the block 12 but no data transfer D1211 in the opposite direction. For a pair composed of the block 10 and the block 12, there are no data transfers D1012 or D1210 in either direction. Accordingly, the blocks 10, 11, and 12 can be executed in that order by pipeline processing.

It is also possible to relatively show the amount of communication between blocks using the matrix image 77 that shows data transfers in "From ...To" format. By doing so, it is possible to understand whether communication is present between blocks and the direction of such communication. In the matrix image 77, the concept of cycle time is lost. However, it is preferable to first check for the presence or absence of data communication using this method and to then start analyzing the bandwidth as described later.

Data transfers between the blocks displayed in the matrix image 77 have no concept of cycle time. However, the variable addresses 26 used by each data transfer are known. Accordingly, by designating any data transfer in the matrix image 77, it is possible to have the source statements 21 or the assembler lists 23 that relate to such data transfers displayed.

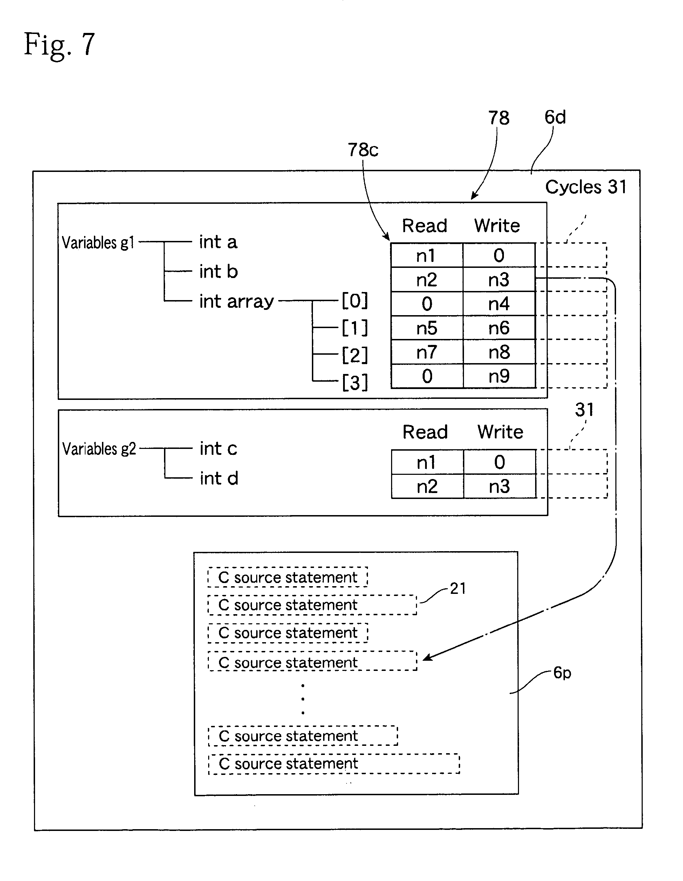

FIG. 7 shows an example where the data transfer D1011 in the matrix image 77 is designated and is backtracked for showing the C source statements 21 that carry out such communication operation. Communication is composed of reads and writes and is normally carried out multiple times (i.e., at multiple timings). From the communication display D1011, a variable window 78 that displays the variables used in such communication is displayed. In the variable window 78, for each variable, operation types ("read" and "write") and respective numbers of access times that are executed on variables are displayed. Cycle information 31 on the cycles where such operations are carried out is included in the numbers of access times 78c. Accordingly, from the memory access information 53 and the debugging information 52, it is possible to determine which processing block and which source statement 21 carried out communication. Accordingly, a popup screen 6p displaying the source statements 21 can be displayed on the display 6d. It is also possible to display the assembler lists 23 instead of the source statements 21.

The second judging function 66 of the analyzing apparatus 55 further analyzes and makes judgments about parallel execution when two processing blocks are executed by pipeline processing and analyzes and makes judgments about the data transfer amount between such blocks and the required bandwidth. The analyzing apparatus 55 also includes a function 68 that graphically displays the result of virtually executing the two processing blocks in parallel, and can also display the bandwidth used during such parallel execution. The analyzing apparatus 55 also includes a function 69 for inputting operation conditions for investigating about the parallel execution of a plurality of processing blocks.

As described earlier, in the ISS 2, the object code 51 is sequentially executed in the order in which the original source program 50 is written. Accordingly, the algorithm that has been divided into a plurality of processing blocks in the analyzing apparatus 55 is sequentially executed and the result is supplied to the analyzing apparatus 55 as the memory access information 53. This means that in the graphical display image 70 that shows the first memory access state, as shown in FIG. 4, the processing blocks 10 and 11 are displayed in a state where the blocks have been executed without parallel processing.

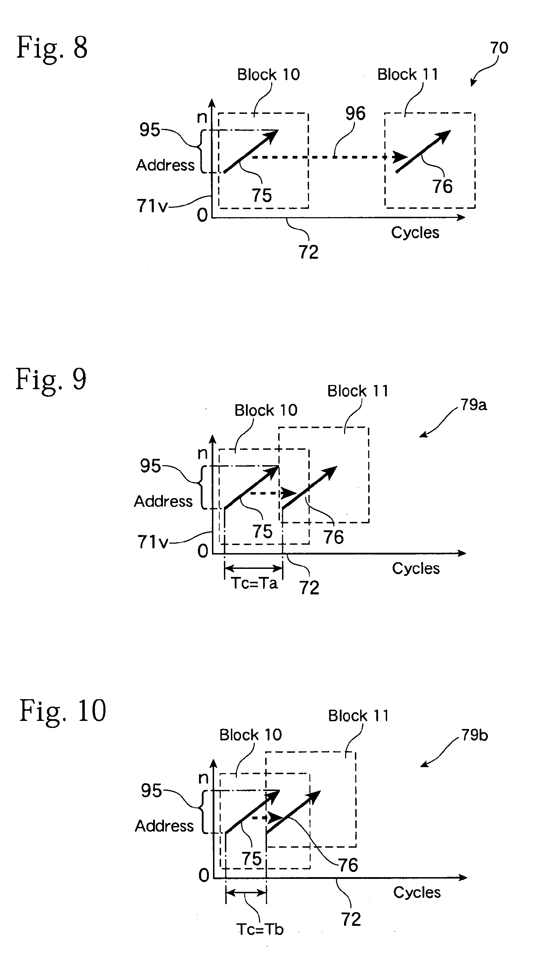

FIG. 8 shows a simplification of the memory access state shown in FIG. 4. Here, in the ISS 2, the processing block 10 and the processing block 11 of the source program 50 are sequentially processed or performed while accessing an entry d[i] in the variable memory 93 used during execution. As a result, the accesses made to the element d[i] in the data memory 93, including the type (that is, a write or read) 27, the address information (the code memory addresses 25 and the variable memory addresses 26) and the cycle information 31 are recorded as the memory access information 53. In the following explanation, the memory 93 is assumed to be a memory with entries d[i] corresponding to address word 0 to address word n.

In the memory access information 53 that includes the cycle information 31, a procedure is recorded where a write 75 of data into a certain address area 95 in the memory is carried out during a given cycle period and then a read 76 of the data from the same address area 95 in the memory 93 is carried out during a later cycle period. By referring to the block information 54 and analyzing the memory access information 53, the second judging function 66 of the analyzing apparatus 55 can understand that the data write 75 is carried out by the processing block 10 and the data read 76 is carried out by the processing block 11 via a code memory address 25. Accordingly, the second judging function 66 can find that the processing block 10 and the processing block 11 have a certain reference relationship (access relationship) 96 for the address area 95 in the memory 93.

Based on this reference relationship 96, the second judging function 66 of the analyzing apparatus 55 can make a judgment about parallel processing for a case where the processing blocks 10 and 11 are implemented by independent hardware, for example, independent circuits or processing units. That is, for a case where the processing blocks 10 and 11 are executed in parallel by different devices, it is determined how soon the processing of the processing block 11 can started and be carried out partially in parallel with the processing block 10 without corrupting the execution of the processing block 11 or a wait being generated.

When no data transfer in the opposite direction that causes a backtrack between the processing block 10 and the processing block 11 is not found in the first judging function 65 described earlier, pipeline processing in block units can be carried out by having data flow in order from the processing block 10 to the processing block 11. The second judging function 66 further investigates whether processing of the same data group or frame can be carried out with the processing block 10 and the processing block 11 being partially executed at the same time, i.e., with the processing block 10 and the processing block 11 being partially executed in parallel. By executing the processing blocks 10 and 11 partially at the same time, it is possible for making the block pipeline process tighter thereby improve the processing speed.

To do so, the second judging function 66 determines how soon the execution of the processing block 11 can be started taking all of the memory addresses referred to by the processing blocks 10 and 11 into account. By doing so, it is possible to finally determine the timing cycles for which pipeline processing of the processing blocks 10 and 11 is possible. A condition setting function 69 can change the operation conditions for parallel execution, and the second judging function 66 analyzes the memory access information 53 in accordance with the set operation conditions.

FIG. 9 shows a graphical display image 79a of the result of investigating pipeline processing when the condition setting function 69 has set the condition that the memory 93 is a single port memory. This graph 79a shows the case where it is possible to simultaneously execute the processing block 10 and the processing block 11 of the source program 50 by using separate hardware for the blocks. The graph 79a shows that it is possible to execute the processing block 11 partially in parallel with the processing block 10 based on the reference relationship for the data memory 93 (i.e., the timings of accesses to the memory 93) so that the timing cycle Tc for pipeline processing can be reduced to the cycle Ta where the accesses to the memory 93 do not overlap one another. Accordingly, as shown in FIG. 8, execution of the processing block 11 can start earlier compared to the case where the source program 50 is serially performed (executed).

FIG. 10 shows a graphical display image 79b of the result of investigating pipeline processing when the condition setting function 69 has set the condition that the memory 93 is a dual port memory. This graph 79b shows, for a case where it is possible to simultaneously execute the processing block 10 and the processing block 11 of the source program 50 by using separate hardware for the blocks, that based on the timings of the accesses to the memory 93, the timing cycle Tc for pipeline processing can be reduced to the cycle Tb where accesses to the memory 93 partially overlap one another. The timing cycle Tc becomes even shorter than the case shown in FIG. 9, and therefore the execution of the processing block 11 can proceed even further.

These investigation results show that for processing divided into the processing block 10 and the processing block 11, hardware that carries out block pipeline processing with the condition that a dual port memory is used and the write 75 and the read 76 are simultaneously executed can reduce the processing time compared to hardware that carries out block pipeline processing with the condition that a single port memory is used and the write 75 and the read 76 are not simultaneously executed. Accordingly, it is possible to judge what performance-based merit is achieved due to the reduction in the processing time when a dual-port memory is used and what cost-based merit is achieved when a single-port memory is used, and then decide on the hardware for performing the source program 50.

In the second determining function 66, accesses by the respective processing blocks 10 and 11 are found in cycle units for all of the memory addresses accessed in the execution memory 93 by the processing blocks 10 and 11. Accordingly, the amount of processing due to the memory write 75 by the processing block 10 and the amount of processing due to the read 76 by the processing block 11 can be known in each cycle. This means that it is possible to calculate the total of the bit transfer amount required to access the memory 93 when the processing blocks 10 and 11 are executed in parallel by a block pipeline operation with the conditions described above. This total bit transfer amount corresponds to the bus width of the memory and the bandwidth of the data bus that are required when executing the processing blocks 10 and 11 in parallel.

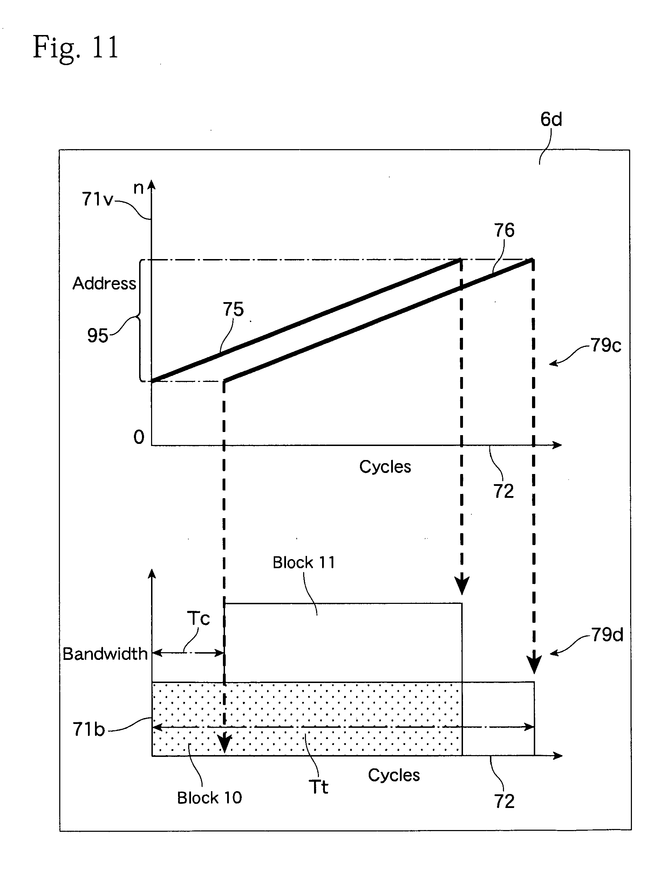

FIG. 11 shows how the evaluation results of the second judging function 66, including the bus width, are displayed by the display function 68. A graph 79c, which shows the reference relationship between memory addresses and cycles, and a graph 79d, which shows the relationship between bandwidth and cycles are displayed on the display 6d. The bandwidth 71b of the graph 79d is the bit width required when accessing the memory or bus in a given cycle time. The total of the bandwidth in each cycle corresponds to the data transfer amount.

The graph 79c showing the reference relationship between memory addresses and cycles in FIG. 11 corresponds to the graph 79b in FIG. 10 for the operation condition where the memory 93 is a dual-port memory. Accordingly, the graph 79d shows the bandwidth in each cycle when the processing blocks 10 and 11 are executed in parallel with this operation condition. Even with the operation condition shown in FIG. 8 and FIG. 9, it is possible to display a graph showing relationship between bandwidth and cycles. From the graph 79d shown in FIG. 11, it is clear what bandwidth is required at the peak time for a device with the specification where a dual-port memory is used and simultaneous access is permitted. In the graph 79d showing the bandwidth, the bandwidth required for the write by the processing block 10 and the bandwidth required for the read by the processing block 11 are displayed differently using different colors or the like. The required bandwidth is the maximum bandwidth in each cycle and the data transfer amount is the total of the bandwidth in each cycle. Although the write 75 and the read 76 overlap in this example, since the total time Tt of the write 75 and the read 76 is known, it is also possible to calculate the average bandwidth for the cycle.

In this way, with the analyzing apparatus 55, it is possible to manually or automatically divide the processing of a predetermined application provided by the source program 50 into a plurality of processing blocks of a suitable size. In addition, by analyzing the memory access state using the analyzing apparatus 55, it is possible to determine whether the processing blocks can be processed by a block pipeline operation using a plurality of devices that operate independently, what reduction in processing time can be achieved by doing so, and the required hardware resources for carrying out the block pipeline operation. Accordingly, by using the analyzing apparatus 55 and the assisting system 5 that includes the analyzing apparatus 55, it is possible to aid the design and development of economical dedicated hardware resources (a processor, for example) for implementing the source program 50.

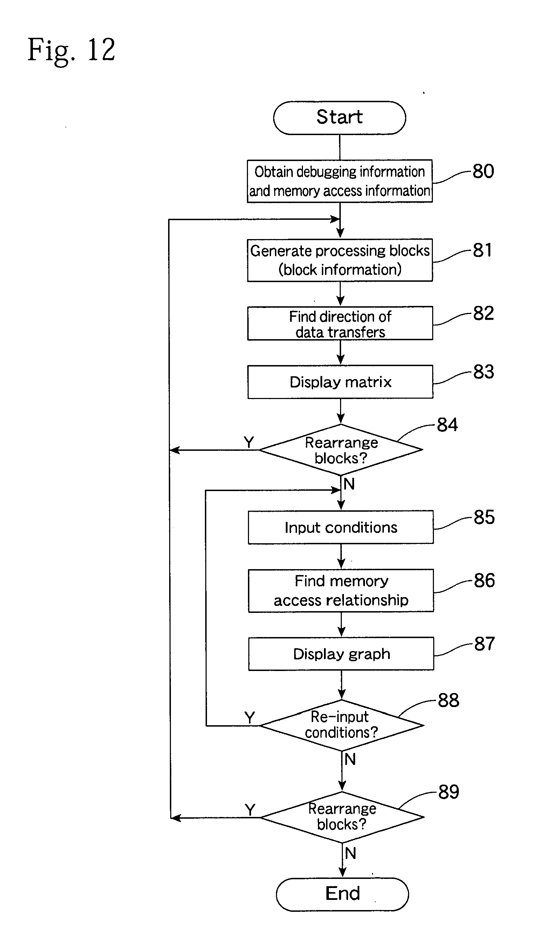

FIG. 12 is a flowchart schematically showing the method whereby the analyzing apparatus 55 divides the source program 50 into a plurality of processing blocks and analyzes the possibility of pipeline processing and the possibility of parallel execution for such processing blocks. First, in step 80, the debugging information 52 and the memory access information 53 are obtained. When such information is stored in a server or the like that is connected via a computer network, it is sufficient to set conditions that make it possible to access the information.

Next, in step 81, the block generating functional unit 61 refers to the source program 50 or the intermediate list file 59 and generates (sets or defines) the processing blocks. It is also possible to generate or regenerate the processing blocks while referring to the memory access state on the graphical display image 70. In step 81, block information 54 in which appropriate block IDs are associated with the code memory addresses of the respective instructions in the source program 50, is generated and recorded in the memory 7.

Next, in step 82, the first judging functional unit 65, as a memory access analyzing means (a memory access analyzer), finds the directions of data transfers between processing blocks that form pairs, based on the memory access information 53 and the block information 54. The result of the previous step is displayed in step 83, as a matrix i'mage by the matrix display functional unit 67. At this stage, it is possible to judge whether the processing blocks set in step 81 can be executed by pipeline processing. Accordingly, in step 84, it is possible to determine whether it is necessary to rearrange the processing blocks, and if necessary, the processing returns to step 81 and the processing blocks is regenerated or changed. For example, it is possible to change the positions at which the source program 50 is divided. As described earlier, since it is possible to freely change the arrangement of the processing blocks in the block information 54, by using the analyzing apparatus 55, it is extremely easy to rearrange the processing blocks. Since it is not necessary to repeat the compiling or to repeat the simulation by the ISS 2, even if processing blocks of a different composition are regenerated, it will be possible to obtain an analysis result for the source program 50 in a short time based on the rearranged processing blocks.

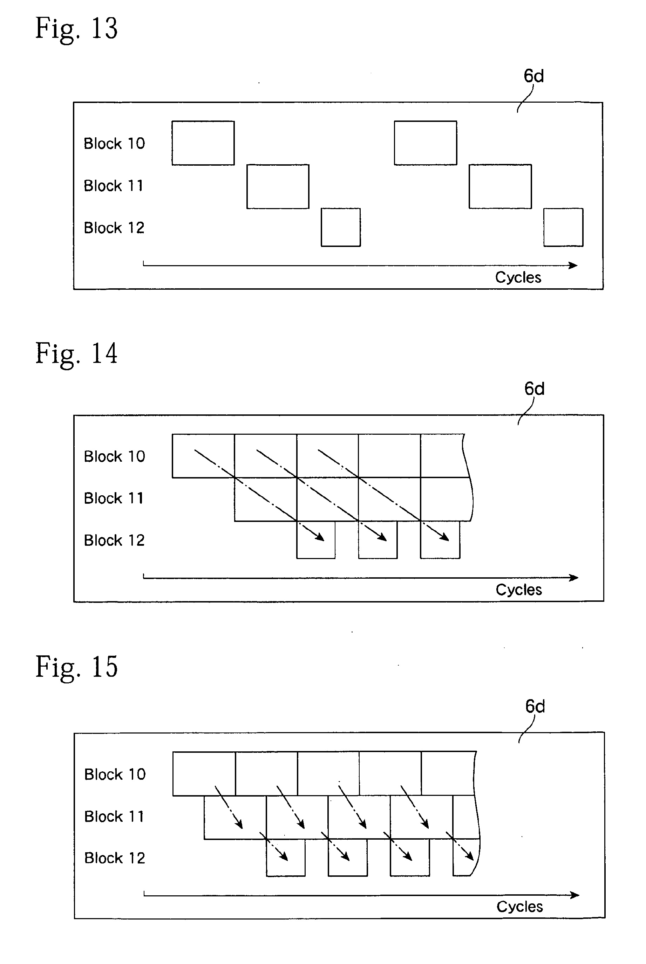

For example, when instructions written in the source program 50 are sequentially executed by the ISS 2, the three processing blocks 10, 11, and 12 that have been defied will be executed as shown in FIG. 13. If the data transfer relationship for the three processing blocks 10, 11, and 12 is as shown by the matrix image 77 in FIG. 6, it will be possible to configure a pipeline from the processing blocks 10, 11, and 12 in that order. Accordingly, as shown in FIG. 14, it is understood that it is possible to execute the processing blocks 10, 11, and 12 in parallel using a pipeline. In this way, the analyzing apparatus 55 is effective at displaying, in units of processing blocks, how the processing of the source program 50 is executed in accordance with cycle times on the display 6d. To do so, the analyzing apparatus 55 includes a function 64 that displays the result of simulating how the source program 50 is executed in units of processing blocks.

When a plurality of processing blocks can be carried out in parallel by a pipeline, it is also possible to evaluate (analyze) whether it is possible to increase the parallelism. In step 85, operation conditions including the type of memory 93, the bandwidth of the bus, and the like can be changed by the operation condition input functional unit 69. In step 86, the second judging functional unit 66, as a memory access analyzing means (a memory access analyzer), finds a reference relationship (an access relationship) between processing blocks (for example, the processing block 10 and the processing block 11) for the same area of the execution memory 93 based on the memory access information 53 and the block information 54 and determines if it is possible to execute the processing blocks 10 and 11 by parallel processing. In step 87, the result of such analysis, including the bandwidth, is displayed by the graph displaying functional unit 68.

When the analysis result is judged and it is desirable to change the operation conditions in step 88, it is possible for the processing to return to step 85 and repeat the analysis. When, in step 89, it is desirable to redefine the processing blocks, the processing can return to step 81 and repeat the procedure from the process that changes the block information 54. The condition that can be changed is not limited to whether the memory is a single port memory or a dual port memory as described earlier and may be the latency consumed by memory access, for example. The conditions for block pipeline processing also change depending on the arrangement of the block regions, and the performance and economic effects also vary. Accordingly, when designing the actual hardware, it is desirable to compare the performance and cost for a number of different conditions. In either case, as described above, since it is not necessary to generate the debugging information 52 and the memory access information 53 again, it is possible to obtain the analysis result in a short time.

In this example, as a result of the analysis of reference relationships for (access relationship to) the memory 93 by the second determining function 66, it is judged that it is possible to execute the processing block 10 and the processing block 11 in parallel and it is not possible to execute the processing block 11 and the processing block 12 in parallel. Accordingly, as shown in FIG. 15, when the processing blocks 10, 11, and 12 are executed by block pipeline processing, the processing blocks 10 and 11 can be executed in parallel with partially overlapping. Accordingly, it is possible to have a design for further increasing the processing speed of the application provided by the source program 50.

If, as a result of the analysis by the method of analyzing described above, it becomes necessary to carry out optimization including modification of the target software itself, it will still be possible to significantly reduce the design period compared to a case where the performance is found to be insufficient only after the software (source program) has been divided into independent blocks and implemented the blocks in devices. Conventionally, if software where functions are sequentially constructed in block units is executed, the block units will be executed one after the other, or in other words sequentially. To execute such software simultaneously in parallel in block units, it has been normal to divide the software itself into independent block units and to carry out analysis by running the software in an environment capable of simultaneous execution. However, until the program is divided into independent blocks, it will not be possible to know the processing performance for such parallel processing or the data transfer amount and bandwidth for that composition. Dividing the software is a major operation, and when there are a number of points or regions that would be fir for dividing the software, the results of dividing the software at different points are not clear until the software is actually divided and operated. The analyzing apparatus 55 and the method of analyzing that uses such analyzing apparatus are therefore an extremely effective solution for the situation described above in the design process for devices.

That is, by executing the ISS 2 that has a function for recording memory access information without dividing the software and then designating the block regions of the software to be analyzed, it is possible to carry out the same level of analysis as when the software is divided into independent blocks and executed. Accordingly, it is possible to determine the characteristics of the pipeline parallelism and the required data transfer amount and bandwidth without dividing the target software into independent blocks, which makes it possible to greatly reduce the design period compared to a conventional method that initially divides up the software and executes independently. This means that the assisting system 5 that uses the analyzing apparatus 55 is effective at the initial stage in the development of a multiprocessor.

The analyzing apparatus 55 can be realized by dedicated hardware or can be realized using a general-purpose computer. A program or program product for causing a computer to operate as an analyzing apparatus includes instructions that make it possible for a computer to execute the various functions described above and can be provided by recording the program or program product on a suitable recording medium such as a CD-ROM. It is also possible to provide the program via a computer network such as the Internet.

Also, although an example has been described above where three block regions, i.e., the processing blocks 10, 11, and 12 are designated and analyzed by the analyzer 55, it is also possible to designate one, two, or four or more blocks. When only one block is designated, a single block region is designated and the non-designated part is recognized as another block. Accordingly, a program includes judging of the present invention is not limited to making judgments about pipeline processing and can be used to make judgments about a data transfer amount and bandwidth.

## Claims

1. An assisting system comprising:
a compiler that compiles a source program including a plurality of source statements to generate object code and also generates debugging information that includes linking respective source statements and/or intermediate lists with code memory addresses and variable memory addresses, the intermediate lists being produced by translating the respective source statements into intermediate language, the code memory addresses being addresses of instructions produced by coding the intermediate lists, the variable memory addresses being addresses of variables accessed by the instructions, the code memory addresses and the variable memory addresses being addresses in execution memory used during execution of the object code;
a simulator that is cycle-based and runs the object code to generate memory access information including code memory addresses, variable memory addresses, and access types that are accessed in cycle units; and
an analyzing apparatus that analyzes the source program using the debugging information and the memory access information,
wherein the analyzing apparatus includes:
a memory that stores block IDs for grouping part of the plurality of source statements or part of the intermediate lists as processing blocks so that the block IDs are associated with code memory addresses of respective instructions based on the debugging information; and
a functional unit that graphically displays, on a display device, based on the memory access information and together with elapse of cycles, an access state for the execution memory when the source program is performed, the access state including the variable memory addresses and the access types and being displayed using a different style for each block ID associated with the code memory addresses of the respective instructions.

2. An apparatus for analyzing a source program including a plurality of source statements using debugging information and memory access information,
wherein the debugging information is generated at a stage where object code is generated by compiling the source program and includes information that links respective source statements and/or intermediate lists with code memory addresses and variable memory addresses, the intermediate lists being produced by translating the respective source statements into intermediate language, the code memory addresses being addresses of instructions produced by coding the intermediate lists, the variable memory addresses being addresses of variables accessed by the instructions, the code memory addresses and the variable memory addresses being addresses in execution memory used during execution of the object code,
the memory access information is generated by a cycle-based simulator that runs the object code and includes code memory addresses, variable memory addresses, and access types that are accessed in cycle units, and
the apparatus comprises:
a memory that stores block IDs for grouping part of the plurality of source statements or part of the intermediate lists as processing blocks so that the block IDs are associated with code memory addresses of respective instructions based on the debugging information; and
a graphical display functional unit that graphically displays, on a display device, based on the memory access information and together with elapse of cycles, an access state for the execution memory when the source program is performed, the access state including the variable memory addresses and the access types and being displayed using a different style for each block ID associated with the code memory addresses of the respective instructions.

3. The apparatus according to claim 2, wherein the graphical display functional unit displays the access state using different colors for different block IDs.

4. The apparatus according to claim 2, further comprising:
a functional unit for displaying at least a part of the plurality of source statements or at least a part of the intermediate lists on the display device; and
a functional unit for assigning, with referring to the debugging information, a block ID that is different to the block IDs of other processing blocks to code memory addresses of instructions corresponding to a part of the plurality of source statements or a part of the intermediate lists that have been designated on the display device.

5. The apparatus according to claim 2, further comprising:
a first judging functional unit that shows a direction of data transfers via the execution memory between processing blocks that form a pair, based on the memory access information and the block IDs associated with the code memory addresses of the respective instructions.

6. The apparatus according to claim 5,
wherein the first judging functional unit further includes displaying, in a matrix on the display device, amounts and directions of data transfers via the execution memory between processing blocks that form a plurality of pairs.

7. The apparatus according to claim 6, further comprising:
a functional unit for displaying, in response to one of the data transfers displayed in the matrix being designated, the source statements or intermediate lists corresponding to the designated data transfer on the display device.

8. The apparatus according to claim 2, further comprising:
a second judging functional unit that finds, based on the memory access information and the block IDs associated with the code memory addresses of the respective instructions, a reference relationship between a first processing block and a second processing block for a same area in the execution memory and shows whether parallel execution is possible for the first processing block and the second processing block.

9. The apparatus according to claim 8,
wherein the second judging functional unit also outputs, based on the memory access information and the block IDs associated with the code memory addresses of the respective instructions, a bandwidth required for accesses to the execution memory by the first processing block and the second processing block.

10. The apparatus according to claim 2, further comprising:
a functional unit for displaying, in response to a cycle of an access to the execution memory graphically displayed by the graphical display functional unit being designated, source statements or intermediate lists corresponding to the designated memory access on the display device.

11. A program product for causing a computer to execute a process of analyzing a source program including a plurality of source statements using debugging information and memory access information,
wherein the debugging information is generated at a stage where object code is generated by compiling the source program and includes information that links respective source statements and/or intermediate lists with code memory addresses and variable memory address, the intermediate lists being produced by translating the respective source statements into intermediate language, the code memory addresses being addresses of instructions produced by coding the intermediate lists, the variable memory addresses being addresses of variables accessed by the instructions, the code memory addresses and the variable memory addresses being addresses in execution memory used during execution of the object code,
the memory access information is generated by a cycle-based simulator that runs the object code and includes code memory addresses, variable memory addresses, and access types that are accessed in cycle units, and
the process of analyzing comprises:
storing block IDs for grouping part of the plurality of source statements or part of the intermediate lists as processing blocks in a memory so that the block IDs are associated with code memory addresses of respective instructions based on the debugging information; and
graphically displaying, on a display device, based on the memory access information and together with elapse of cycles, an access state for the execution memory when the source program is performed, the access state including the variable memory addresses and the access types and being displayed using a different style for each block ID associated with the code memory addresses of the respective instructions.

12. The program product according to claim 11, wherein the process of analyzing further comprises:
processing for a first judging that includes showing a direction of data transfers via the execution memory between processing blocks that form a pair, based on the memory access information and the block IDs associated with the code memory addresses of the respective instructions.

13. The program product according to claim 12,
wherein the processing for the first judging further includes displaying, in a matrix on the display device, an amount and direction of data transfers via the execution memory between processing blocks that form a plurality of pairs.

14. The program product according to claim 11, wherein the process of analyzing further comprises:
processing for a second judging that includes finding, based on the memory access information and the block IDs associated with the code memory addresses of the respective instructions, a reference relationship between a first processing block and a second processing block for a same area in the execution memory and showing whether parallel execution is possible for the first processing block and the second processing block.

15. The program product according to claim 12,
wherein the processing for the second judging further includes outputting, based on the memory access information and the block IDs associated with the code memory addresses of the respective instructions, a bandwidth required for accesses to the execution memory by the first processing block and the second processing block.

16. A method of analyzing a source program including a plurality of source statements using debugging information and memory access information,
wherein the debugging information is generated at a stage where object code is generated by compiling the source program and includes information that links respective source statements and/or intermediate lists with code memory addresses and variable memory addresses, the intermediate lists being produced by translating the respective source statements into intermediate language, the code memory addresses being addresses of instructions produced by coding the intermediate lists, the variable memory addresses being addresses of variables accessed by the instructions, the code memory addresses and the variable memory addresses being addresses in execution memory used during execution of the object code,
the memory access information is generated by a cycle-based simulator that runs the object code and includes code memory addresses, variable memory addresses, and access types that are accessed in cycle units, and
the method comprises steps of:
1. assigning block IDs to part of the plurality of source statements or part of the intermediate lists to group the source statements or the intermediate lists as processing blocks and storing the block IDs in a memory so as to be associated with code memory addresses of respective instructions based on the debugging information; and
a2. finding a direction of data transfers via the execution memory between processing blocks that form a pair, by memory access analyzing means, based on the memory access information and the block IDs associated with the code memory addresses.

17. The method according to claim 16, further comprising a step of:
a3. displaying, in a matrix on a display device, amounts and directions of data transfers via the execution memory between processing blocks that form a plurality of pairs.

18. A method of analyzing a source program including a plurality of source statements using debugging information and memory access information,
wherein the debugging information is generated at a stage where object code is generated by compiling the source program and includes information that links respective source statements and/or intermediate lists with code memory address and variable memory address, the intermediate lists being produced by translating the respective source statements into intermediate language, the code memory addresses being addresses of instructions produced by coding the intermediate lists, the variable memory addresses being addresses of variables accessed by the instructions, the code memory addresses and the variable memory addresses being addresses in execution memory used during execution of the object code,
the memory access information is generated by a cycle-based simulator that runs the object code and includes code memory addresses, variable memory addresses, and access types that are accessed in cycle units, and
the method comprises steps of:
b1. assigning block IDs to part of the plurality of source statements or part of the intermediate lists to group the source statements or the intermediate lists as processing blocks and storing the block IDs in a memory so as to be associated with code memory addresses of respective instructions based on the debugging information; and
b2. finding, a reference relationship between a first processing block and a second processing block for a same area in the execution memory, by memory access analyzing means, based on the memory access information and the block IDs associated with the code memory addresses of the respective instructions, and showing whether parallel execution is possible for the first processing block and the second processing block.

19. The method according to claim 18, further comprising a step of:
b3. outputting, by the memory access analyzing means, based on the memory access information and the block IDs associated with the code memory addresses of the respective instructions, a bandwidth required for accesses to the execution memory by the first processing block and the second processing block.
